# EUROPEAN PATENT APPLICATION

(11) **EP 4 729 817 A1**
(43) Date of publication of application: **22.04.2026**
(21) Application number: 24851592.6
(22) Date of filing: 23.07.2024
(51) Int. Cl.: F16K 31/04

(54) **ELECTRIC VALVE**

(30) Priority: 07.08.2023 JP 2023128860
(71) Applicant: Nippon Thermostat Co., Ltd., Kiyose-shi Tokyo 204-0003 (JP)
(72) Inventor: KUMASHIRO Tsuyoshi, Kiyose-shi, Tokyo 204-0003 (JP); SHIBATA Masayoshi, Kiyose-shi, Tokyo 204-0003 (JP)
(74) Representative: Weickmann & Weickmann PartmbB
(86) International application number: PCT/JP2024/026288
(87) International publication number: WO 2025/033164

(57) **Abstract**

An electric valve 100 according to the present invention includes: a mounting portion 111 to which a rotation sensor 101 having a sensor main body 103 and a lead wire 102 is to be mounted; and input/output wiring portions 130 of which at least a part is arranged in the mounting portion 111 and to which the lead wire 102 is connected, wherein the wiring portions 130 have sandwiching portions 131 that sandwich the lead wire 102.

## Description

### Technical Field

The present invention relates to an electric valve mounted with a rotation sensor.

### Background Art

Conventionally, as described in Japanese Patent Laid-Open No. 2015-218763, an electric valve that adjusts a flow rate under predetermined conditions is used. The electric valve has an inflow port for cooling water and a plurality of outflow ports for discharging the inflowing cooling water, and the cooling water is sent to each apparatus through pipes connected to each outflow port. Japanese Patent Laid-Open No. 2015-218763 discloses an application example of an automotive cooling water to an electric valve. The electric valve is provided in a cylinder head of an engine and the cooling water is introduced into the electric valve through an inflow passage. The electric valve has a motor, a valve element that is opened and closed by the motor via a speed-reduction mechanism, and a housing. The valve element is rotationally controlled and the valve opens or closes according to a rotational angle of the valve element. A flow rate of the cooling water is adjusted by the valve element and the cooling water is sent from the electric valve to a heating heat exchanger, an oil cooler, and a radiator. The electric valve is electrically controlled by a control apparatus according to a cooling water temperature, vehicle operating conditions, and the like.

The control apparatus controls a valve opening based on the rotational angle of the valve element around a rotary shaft. The electric valve is provided with a rotation sensor. The rotational angle of the valve element is detected by the rotation sensor. The rotation sensor may be arranged in a limited space inside an upper cover of the housing of the electric valve so as to avoid interfering with each part such as the rotary shaft that rotationally drives the valve element. The rotation sensor comprises a sensor main body and a lead wire. The sensor main body is fixed to the cover that is a part of the housing of the electric valve while the lead wire is connected to a terminal provided on the cover.

### Citation List

### Patent Literature

Patent Literature 1: Japanese Patent Laid-Open No. 2015-218763

### Summary of Invention

### Technical Problem

As a method of fixing the rotation sensor to the cover, for example, insert molding is used in which, when molding the cover with resin, the cover is molded in a state where the rotation sensor is inserted into a mold in advance. However, since the rotation sensor cannot withstand the high temperature during insert molding as-is, so-called two-color molding must be performed in which the rotation sensor is covered by a different resin at a temperature which the rotation sensor can withstand prior to insert molding and, subsequently, the rotation sensor covered by the resin is inserted into the mold of the cover and a cover member is molded. However, performing two-color molding increases mold cost and man-hours.

In addition, while methods for connecting the lead wire to an input/output wiring portion include laser welding, resistance welding, and crimping, all require clamping the lead wire and the wiring portion between a base and either a crimping punch or a welding rod, necessitating the introduction of processing equipment for this purpose. Therefore, manufacturing costs increase. What is more, increased constraints on component layout demand more challenging solutions.

The present invention has been devised to solve the problem described above and an object thereof is to provide an electric valve capable of facilitating assembly work of a rotation sensor and reducing equipment costs.

### Solution to Problem

An electric valve according to the present invention comprises:
a housing having an opening at one end and having communication ports in an outer periphery;
a valve element inserted into the housing and configured to rotate around a rotary shaft to open and close the communication ports;
a drive apparatus configured to rotationally drive the valve element;
a detected portion to be mounted to one end of the rotary shaft;
a rotation sensor configured to detect a rotational angle of the detected portion; and
a cover to be mounted on another end of the housing, wherein
the rotation sensor has a sensor main body and a lead wire,
the cover comprises a mounting portion configured to hold the sensor main body so as to face the detected portion and input/output wiring portions to which the lead wire is connected, and
the wiring portions have sandwiching portions configured to sandwich the lead wire.

The electric valve according to the present invention comprises the wiring portions to which the lead wire of the rotation sensor is connected, and the wiring portions have the sandwiching portions configured to sandwich the lead wire. Therefore, the electric valve according to the present invention enables the lead wire to be fixed to the wiring portions by simply inserting the lead wire into the sandwiching portions. As a result, assembly work of the rotation sensor to the electric valve can be facilitated and equipment costs can be reduced.

Preferably, the sandwiching portions of the electric valve according to the present invention are formed so as to be capable of receiving the lead wire from a same direction as a direction in which the rotation sensor is inserted into the mounting portion and sandwiching the lead wire.

The sandwiching portions of the electric valve according to the present invention are capable of receiving the lead wire from the same direction as the direction in which the rotation sensor is inserted into the mounting portion and sandwiching the lead wire. Therefore, assembly work of a rotation sensor can be facilitated.

Preferably, the sandwiching portions of the electric valve according to the present invention are notched portions formed in the wiring portions.

The sandwiching portions of the electric valve according to the present invention are notched portions formed in the wiring portions. Therefore, the lead wire of the rotation sensor can be inserted into the notched portions and the lead wire can be assembled to the sandwiching portions. As a result, assembly work of the rotation sensor to the electric valve can be facilitated.

Preferably, the mounting portion of the electric valve according to the present invention has inner walls configured to hold an outer surface of the rotation sensor and the mounting portion is configured to be capable of sandwiching and holding the rotation sensor with the inner walls.

The mounting portion of the electric valve according to the present invention is capable of sandwiching and holding the rotation sensor with the inner walls. Therefore, the rotation sensor can be mounted by pushing the rotation sensor into a space between the inner walls. As a result, assembly work can be facilitated.

Preferably, the electric valve according to the present invention has wall portions that surround the mounting portion and an end surface of the wall portions, and the wall portions have outflow portions formed smaller than a perpendicular direction distance of the end surface from a surface of the mounting portion.

The electric valve according to the present invention has the wall portions and the end surface of the wall portions, and the wall portions have the outflow portions formed smaller than the perpendicular direction distance of the end surface from the surface of the mounting portion. Therefore, even when the mounting portion is filled with a resin material, if the amount of the resin material filling the mounting portion equals or exceeds a predetermined amount, the resin material can be automatically adjusted to a certain height by causing the resin material to flow out from the outflow portions. As a result, bulging resin material resulting from filling the mounting portion with excess resin material can be prevented from interfering with other components and assembly work of the rotation sensor can be facilitated.

Preferably, the electric valve according to the present invention comprises a sealing portion configured to cover at least the lead wire, and the outflow portions are provided in plurality and arranged at positions where at least the sealing portion is sandwiched.

The electric valve according to the present invention comprises the sealing portion, and the outflow portions are provided in plurality and arranged at positions where at least the sealing portion is sandwiched. Therefore, the viscous resin material filled into the mounting portion is automatically adjusted to quickly achieve a uniform height. As a result, assembly work of the rotation sensor can be facilitated.

### Brief Description of Drawings

FIG. 1 is an overall schematic view of a cooling system including an electric valve according to an embodiment of the present invention.
FIG. 2 is a vertical sectional view showing the electric valve in FIG. 1.
FIG. 3 is another vertical sectional view of the electric valve in FIG. 1.
FIG. 4 is a perspective view showing a portion C in FIG. 3 from an inner surface side.
FIG. 5 is a sectional view taken along V-V in FIG. 4.
FIG. 6A is a side view showing one end portion of a wiring portion in FIG. 5 as viewed in a direction of an arrow D.
FIG. 6B is a side view showing another example of the wiring portion.
FIG. 7 is a schematic view showing a method of mounting a rotation sensor to a mounting portion.

### Description of Embodiments

### <Embodiment>

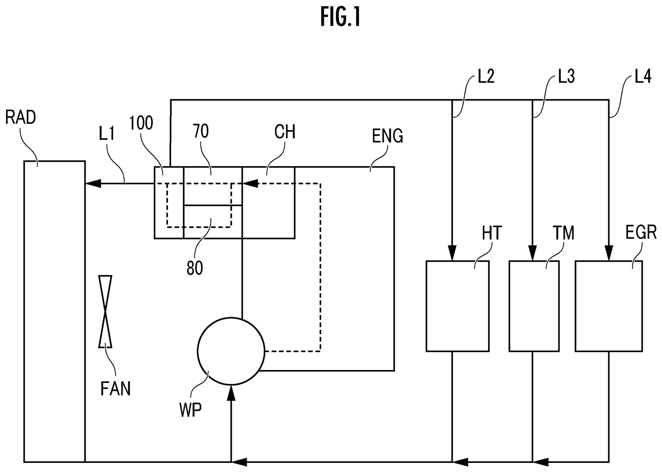

Hereinafter, an electric valve 100 according to an embodiment of the present invention will be described with reference to FIG. 1. FIG. 1 is an overall schematic view of a cooling system including the electric valve 100 according to the embodiment of the present invention.

An automotive cooling system to which the electric valve 100 is applied will be described with reference to FIG. 1. The electric valve 100 according to the embodiment of the present invention can be used as a flow control valve in a cooling system. The electric valve 100 used in the automotive cooling system is mounted to, for example, a cylinder head CH in an upper part of an internal combustion engine ENG installed in a vehicle. A fluid or, in other words, cooling water of the cooling system having been pressurized by a water pump WP provided in the internal combustion engine ENG is introduced to the electric valve 100. The electric valve 100 adjusts and distributes amounts of the cooling water supplied to cooling water-using apparatuses such as a radiator RAD, a heater HT, a transmission TM (such as AT or CVT), and an exhaust gas recirculation apparatus (EGR). Note that the cooling water-using apparatuses are not limited to the heater HT, the transmission TM, and the exhaust gas recirculation apparatus EGR and necessary apparatuses are provided depending on the vehicle.

The cooling water from the electric valve 100 to the radiator RAD is sent from the electric valve 100 through a feed-side pipe L1. The cooling water dissipates heat and lowers its temperature as it passes through the radiator RAD comprising a cooling fan FAN. The cooling water having passed through the radiator RAD passes through a return-side pipe L1 and returns to the internal combustion engine ENG. Between the electric valve 100 and the heater HT, the transmission TM, and the exhaust gas recirculation apparatus EGR, the cooling water is sent from the electric valve 100 though feed-side pipes L2, L3, and L4, respectively. The cooling water having passed through the heater HT, the transmission TM, and the exhaust gas recirculation apparatus EGR returns to the water pump WP through return-side pipes L2, L3, and L4, respectively. The cooling water having returned to the water pump WP is pressurized and sent out once again, and after passing through the cylinder head CH, the cooling water is distributed to the radiator RAD and each cooling water-using apparatus via the electric valve 100.

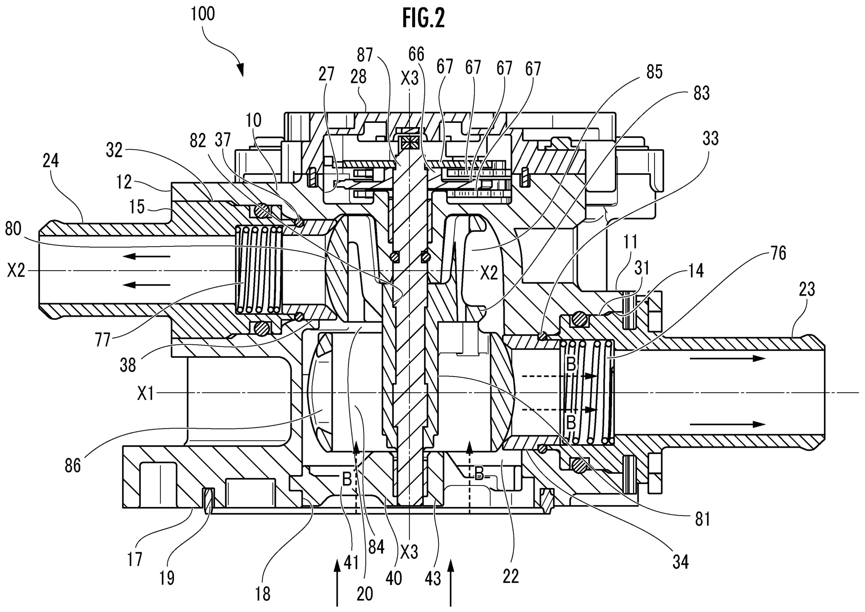

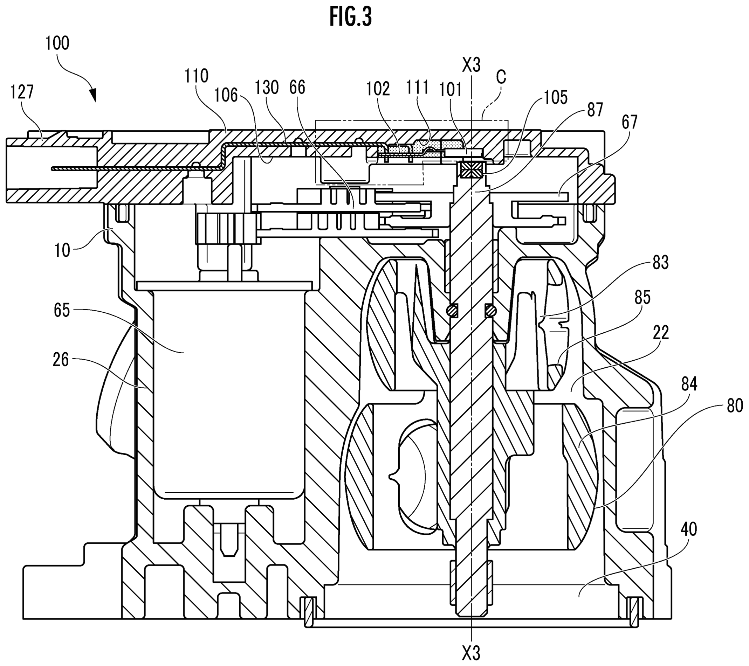

A configuration of the electric valve 100 will be described with reference to FIGS. 2 and 3. FIG. 2 is a vertical sectional view of the electric valve 100 that is a sectional view taken along a plane passing through a valve element 80. FIG. 3 is a different vertical sectional view from FIG. 2. FIG. 2 shows inflow and outflow paths of the cooling water to and from the electric valve 100. FIG. 3 shows a cover 110.

FIG. 2 shows a state where the valve element 80 is closed. The electric valve 100 comprises a housing 10, a motor 65, a speed reducer 66, and the valve element 80. The housing 10 comprises a valve accommodating portion 20 constituted of an approximately columnar internal space 22, a motor accommodating portion 26, a speed reducer accommodating portion 27, and the cover 110. The electric valve 100 has a flow path B for directing the cooling water to the radiator RAD and the valve element 80 is arranged in the flow path B. In FIG. 2, the flow path B is indicated by a dashed arrow B. Opening and closing of the valve element 80 are controlled by a control apparatus (not illustrated).

The flow path B is a flow path that directs the cooling water to the radiator RAD. The valve element 80 is controlled not only by a control method in which opening and closing is controlled solely based on a cooling water temperature Tx but, as necessary, also controlled according to a vehicle travel state and the like.

The housing 10 comprises a first outflow portion 11 through which the cooling water to be sent to the radiator RAD is discharged, a second outflow portion 12 through which the cooling water to be sent to each cooling water-using apparatus is discharged, and an inflow portion 18 through which the cooling water is introduced from the internal combustion engine ENG. The electric valve 100 is fixed by bringing a lower surface of the valve accommodating portion 20 into contact with the upper part of the cylinder head CH. A first adapter 23 and a second adapter 24 are fitted into the first outflow portion 11 and the second outflow portion 12 to be fixed, respectively. A pipe L1 is connected to the first adapter 23, and any one or more of pipes L2 to L4 are connected to the second adapter 24. In the present embodiment, the first outflow portion 11 and the second outflow portion 12 correspond to the communication ports of the present invention.

One end portion 31 of the first adapter 23 and one end portion 32 of the second adapter 24 have a sealing apparatus including a seal and a spring, respectively. The one end portion 31 of the first adapter 23 has a seal 33 and a spring 76 while the one end portion 32 of the second adapter 24 has a seal 37 and a spring 77. The seals 33 and 37 are integrally formed by an elastic material such as a resin material or rubber.

The one end portions 31 and 32 are formed in a cylindrical shape having an opening. The springs 76 and 77 formed with outer diameters that are slightly smaller than inner diameters of the one end portions 31 and 32 are inserted into the openings of the one end portions 31 and 32, respectively. Inner surfaces of openings of the one end portions 31 and 32 are provided with annular surfaces perpendicular to directions of central axes X1 and X2 of the one end portions 31 and 32, respectively.

Cylindrical members 34 and 38 are arranged between the one end portions 31 and 32 and the valve element 80, respectively. The cylindrical members 34 and 38 are in contact with corresponding regions of the valve element 80, respectively. The cylindrical members 34 and 38 are mounted with one ends of the springs 76 and 77 abutting against the cylindrical members 34 and 38, respectively. In other words, the cylindrical members 34 and 38 are pressed against corresponding curved surfaces of the valve element 80 by the springs 76 and 77, respectively. Therefore, even when the valve element 80 operates and rotates, the cylindrical members 34 and 38 being biased by the springs 76 and 77 follow suit and contact states with the valve element 80 are maintained. Therefore, the cooling water flowing out from the valve element 80 can flow inside the first adapter 23 and the second adapter 24 without leaking from the cylindrical members 34 and 38 and the seals 33 and 37.

An abutting portion 17 provided in a lower part of the valve accommodating portion 20 will be described with reference to FIG. 2. Note that in this description, upward in the drawing in FIG. 2 will be referred to as "up" and downward in the drawing will be referred to as "down". The cylinder head CH of the internal combustion engine ENG is provided with a cylinder head opening OP that is opened upward. The abutting portion 17 has a flat surface that enables the abutting portion 17 to abut against the mounting portion of the cylinder head CH of the housing 10. The abutting portion 17 is provided with the inflow portion 18 that corresponds to an opening shape of the cylinder head opening OP. The electric valve 100 abuts against an upper surface of the cylinder head CH in a state where the inflow portion 18 is aligned with the cylinder head opening OP and is fixed to the cylinder head CH by a bolt or the like (not illustrated). The inflow portion 18 is an opening formed in the abutting portion 17. The abutting portion 17 has a seal 19 provided so as to surround an outer side of the inflow portion 18 in the abutting portion 17.

The valve accommodating portion 20 of the electric valve 100 communicates with the inflow portion 18. The valve element 80 is accommodated in the valve accommodating portion 20.

As shown in FIG. 2, the speed reducer 66 is accommodated in the speed reducer accommodating portion 27 formed in the upper part of the electric valve 100. The speed reducer accommodating portion 27 is a sealed space that is sealed by the cover 110. The cover 110 is a member of which an inside surface is mounted with a rotation sensor and the cover 110 is mounted so as to cover the upper part of the electric valve 100. The speed reducer 66 has a plurality of gears 67. One gear 67 among the plurality of gears has a fitting hole at a center thereof. A rotary shaft 87 of the valve element 80 is fitted into the fitting hole of the gear 67. A detected portion 105 for rotation sensor detection is provided at an end portion of the rotary shaft 87 on a side of the gears 67 or, in other words, an end portion on a side of the cover 110. The detected portion 105 is, for example, a magnet. One of the plurality of gears of the speed reducer 66 is fixed to an output shaft (not illustrated) of the motor 65, and the motor 65 is rotationally controlled by a control apparatus and a rotary torque is transmitted by the speed reducer 66. The torque transmitted to the last gear 67 rotates the valve element 80 in one direction or another direction by a predetermined rotational angle. In the present embodiment, the motor 65 and the speed reducer 66 constitute a drive apparatus.

As shown in FIG. 2, a support portion 40 is fitted into the inflow portion 18. The support portion 40 is a member that supports a lower-side end portion of the rotary shaft 87. The support portion 40 has a plurality of rod-shaped portions 41 and a central portion 43 of which a central axis is coaxial with a central axis of the rotary shaft 87. The rod-shaped portions 41 are formed so as to radially protrude from the central portion 43 in a top view.

### [Configuration of valve element 80]

A configuration of the valve element 80 will be described with reference to FIG. 2. The valve element 80 operates using a drive force from the motor 65 that is transmitted via the speed reducer 66. The valve element 80 is accommodated in the valve accommodating portion 20. The valve element 80 is formed in an approximately columnar shape having an internal space, and has a shaft insertion portion 81 provided with a central hole 82 and the rotary shaft 87 to be fitted into the shaft insertion portion 81. A space serving as a flow path of cooling water is formed inside the valve element 80.

The valve element 80 formed in a cylindrical shape has a first valve portion 83 and a second valve portion 84 of which respective outer circumferential surfaces protrude as arc surfaces in a side view. The first valve portion 83 and the second valve portion 84 are configured so as to overlap with each other in a direction of a central axis X3 of the valve element 80 or, in other words, in an up-down direction. The first valve portion 83 and the second valve portion 84 are formed so as to be non-rotatable relative to each other. The first valve portion 83 on an upper side of the valve element 80 is positioned on an extension line in a longitudinal direction of the second adapter 24. In addition, the second valve portion 84 on a lower side of the valve element 80 is positioned on an extension line in a longitudinal direction of the first adapter 23. The first valve portion 83 is provided with one valve opening 85 constituted of a long hole that opens in a predetermined angular range in a circumferential direction. The second valve portion 84 is provided with one valve opening 86 constituted of a long hole that opens in a predetermined angular range in a circumferential direction.

A discharge temperature range of the cooling water supplied to the radiator RAD connected to the electric valve 100 and to each cooling water-using apparatus varies depending on each cooling water-using apparatus. Therefore, opening angles of the long holes of the valve opening 85 and the valve opening 86 as well as opening positions of the first valve portion 83 and the second valve portion 84 on the outer circumferential surface are determined so that a valve opening/closing state is optimized for each cooling water-using apparatus. The long holes of the valve openings 85 and 86 are formed with an opening angle of 180 degrees or less in a top view centered on the central axis X3, respectively.

A mounting structure of the cover 110 in the electric valve 100 will be described with reference to FIG. 3. FIG. 3 is a vertical sectional view along a different cross section from FIG. 2 and is a sectional view taken along a plane that passes through the rotary shaft 87 and the cover 110. FIG. 3 shows the cover 110, the valve element 80, and the motor 65 included in the electric valve 100.

The cover 110 is a member that is mounted so as to cover the upper part of the electric valve 100 and that is positioned above the speed reducer accommodating portion 27. A mounting portion 111 to which a rotation sensor 101 is to be mounted is provided on an inside surface 106 of the cover 110. The cover 110 has a plurality of input/output wiring portions 130 (bus bars) that are insert-molded with both end portions exposed. The cover 110 is integrally formed with a connector portion 127 to be connected to a control apparatus (not illustrated), and one end of the plurality of wiring portions 130 is arranged inside the connector portion 127. The rotation sensor 101 is arranged with a slight gap relative to an object and detects a rotational angle of a rotary body that is the object.

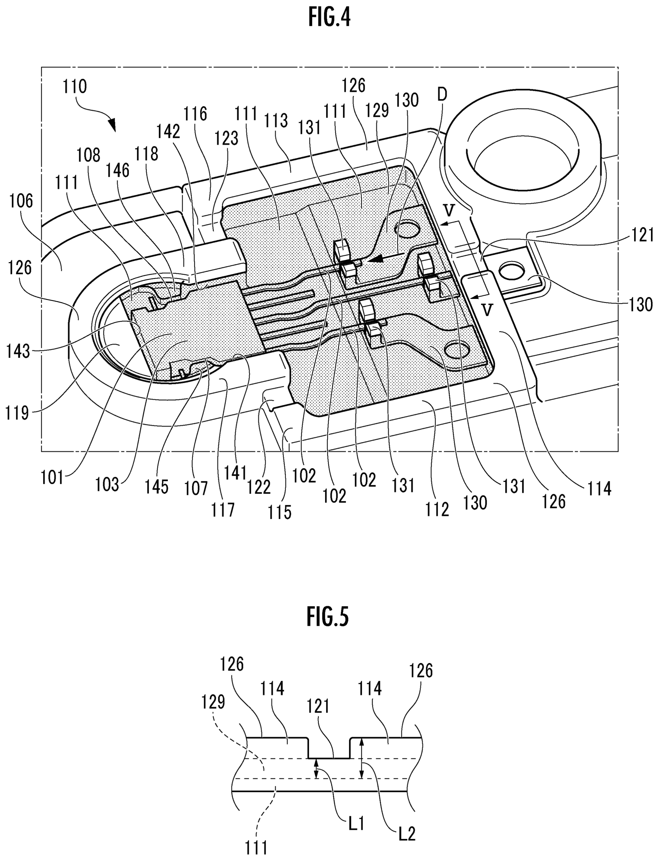

The mounting portion 111 will be described with reference to FIG. 4. FIG. 4 is a perspective view showing the inside surface 106 of a portion indicated by reference sign C in FIG. 3 as viewed from inside of the electric valve 100 or, in other words, an up-down inverted view. The mounting portion 111 is arranged so as to enclose a partial region of the inside surface 106 and has wall portions 112, 113, 114, 115, 116, 117, 118, and 119, each having an end surface 126. The wall portions 112, 113, 114, 115, 116, 117, 118, and 119 are arranged so as to enclose the mounting portion 111. In other words, a region of the mounting portion 111 is demarcated by the wall portions 112, 113, 114, 115, 116, 117, 118, and 119. The wall portions 112 and 113 form a pair of parallel wall portions. The wall portions 115 and 116 are arranged so as to be spaced apart but parallel to each other on, for example, a straight line, while the wall portion 114 and the wall portions 115 and 116 form pairs of parallel wall portions. In other words, the wall portions 112, 113, 114, 115, and 116 demarcate an approximately rectangular region.

The wall portions 117 and 118 include portions formed as straight portions of a certain length arranged perpendicular to the wall portions 115 and 116, respectively. The approximately rectangular region demarcated by the wall portions 112, 113, 114, 115, and 116 and a region including an arc-shaped contour line demarcated by the wall portions 117, 118, and 119 are formed connected to each other.

Another end of the plurality of wiring portions 130 connected to the rotation sensor 101 is arranged in the mounting portion 111 and a lead wire 102 of the rotation sensor 101 is connected thereto. A sealing portion 129 is formed in the mounting portion 111 in a state where the rotation sensor 101 and the lead wire 102 are mounted. The sealing portion 129 is a portion where a fluid resin material such as an adhesive is filled into the mounting portion 111 and solidified. Alternatively, the sealing portion 129 may be a potting compound used as a filler. The fluid resin material is filled from a surface of the mounting portion 111 to a predetermined height in a vertical direction. The sealing portion 129 covers and seals the rotation sensor 101, the wiring portions 130, and the mounting portion 111. The sealing portion 129 covers at least a plurality of lead wires 102, thereby fixing the positions of the lead wires 102. Accordingly, the plurality of lead wires 102 can be held without short-circuiting each other.

As shown in FIG. 4, the wall portions 114, 115, and 116 have the end surface 126 and outflow portions 121, 122, and 123 of the wall portions 114, 115, and 116, respectively. The outflow portions 121, 122, and 123 have outflow portions 121, 122, and 123 that are formed smaller than a perpendicular direction distance of the end surface 126 of the wall portions 114, 115, and 116 from the surface of the mounting portion 111. In other words, the outflow portions 121, 122, and 123 are recessed portions provided on the end surfaces of the wall portions 114, 115, and 116, respectively. When the resin material filled into the mounting portion 111 equals or exceeds a predetermined amount, the outflow portions 121, 122, and 123 can cause the resin material to flow out from the outflow portions 121, 122, and 123 and automatically adjust the resin material to a certain height. Note that the outflow portions 121, 122, and 123 may be provided in any of the wall portions other than the wall portions 114, 115, and 116 such as the wall portions 117, 118, and 119 so that the perpendicular direction distance of a surface of the sealing portion 129 from the mounting portion 111 or, in other words, a position of the surface of the sealing portion 129 is a predetermined height.

FIG. 5 shows a cross section taken along V-V in FIG. 4. A perpendicular direction distance L1 of the outflow portion 121 from the surface of the mounting portion 111 is formed smaller than a perpendicular direction distance L2 of the end surface 126 of the wall portion 114 from the surface of the mounting portion 111. Accordingly, excessive resin material with fluidity filled to a height equal to or higher than the perpendicular direction L1 flows out from the outflow portions 121, 122, and 123. Therefore, the perpendicular direction distance of the surface of the sealing portion 129 from the mounting portion 111 is automatically adjusted to L1. While the outflow portion 121 was used in the description provided above, the outflow portions 122 and 123 are also formed in a same height relationship as the outflow portion 121. The wall portion 114 and the wall portions 115 and 116 are arranged parallel to each other with the sealing portion 129 sandwiched therebetween. In other words, the outflow portion 121 and the outflow portions 122 and 123 are arranged at positions that sandwich the sealing portion 129.

The electric valve 100 according to the present invention has the wall portions 114, 115, 116, 117, 118, and 119, and the end surface 126 of the wall portions 114, 115, 116, 117, 118, and 119, and the wall portions 114, 115, 116, 117, 118, and 119 have the outflow portions 121, 122, and 123 that are formed smaller than the perpendicular direction distance of the end surface 126 from the surface of the mounting portion 111. When the resin material filled into the mounting portion 111 equals or exceeds a predetermined amount, the outflow portions 121, 122, and 123 can cause the resin material to flow out from the outflow portions 121, 122, and 123 and automatically adjust the resin material to a certain height. As a result, assembly work of the rotation sensor 101 can be facilitated and equipment costs can be reduced.

The electric valve 100 according to the present invention comprises the sealing portion 129, and the outflow portions 121, 122, and 123 are provided in plurality and arranged at positions where at least the sealing portion 129 is sandwiched. Therefore, the viscous resin material filled into the mounting portion 111 is automatically adjusted to quickly achieve a uniform height. As a result, assembly work of the rotation sensor 101 can be facilitated and equipment costs can be reduced. Note that the outflow portions 121, 122, and 123 need not necessarily be provided in plurality and, for example, a single outflow portion may suffice.

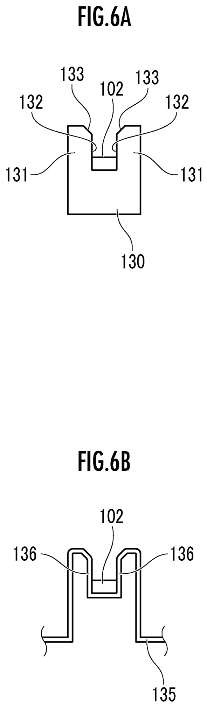

A sandwiching portion 131 provided in one end portion of the wiring portion 130 will be described with reference to FIGS. 4, 6A, and 6B. As shown in FIG. 4, the wiring portion 130 is formed of a conductive plate-like member. The sandwiching portion 131 arranged in the mounting portion 111 is formed in, for example, a shape created by raising one end portion of the wiring portion 130 at a right angle. FIG. 6A is a side view showing the sandwiching portion 131 in a direction of an arrow D in FIG. 4 or, in other words, in a state where the lead wire 102 has been mounted. A notched portion 132 and the sandwiching portion 131 formed in a bifurcated shape by the notched portion 132 are formed in one end portion of the wiring portion 130.

The notched portion 132 is, for example, a groove cut in a certain width along a longitudinal direction of the wiring portion 130 from one end portion of the wiring portion 130. A groove width of the notched portion 132 is formed slightly shorter than a width dimension of the lead wire 102 so as to enable the lead wire 102 to reliably come into contact with and be connected to the notched portion 132 or, in other words, to enable the lead wire 102 to be press-fitted into the notched portion 132. Corners positioned on both sides of a tip of the notched portion 132 are cut at an angle, and an inlet portion of the notched portion 132 is formed wider than the width dimension of the lead wire 102. Therefore, the lead wire 102 can be readily inserted into the notched portion 132. The lead wire 102 is inserted perpendicular to the notched portion 132 and fixed. The lead wire 102 can be fixed by simply inserting the lead wire 102 into the notched portion 132. After assembly of the lead wire 102, solder is added to the notched portion 132 as necessary. Accordingly, the lead wire 102 can be reliably fixed by the sandwiching portion 131.

The electric valve 100 according to the present invention comprises the wiring portion 130 to which the lead wire 102 of the rotation sensor 101 is connected, and the wiring portion 130 has the sandwiching portion 131 that sandwiches the lead wire 102. Therefore, the electric valve 100 can fix the lead wire 102 by simply inserting the lead wire 102 into the sandwiching portion 131. As a result, the electric valve 100 capable of facilitating assembly work of the rotation sensor 101 and reducing equipment costs can be realized.

The sandwiching portion 131 of the electric valve 100 according to the present invention is formed so as to enable the lead wire 102 to be moved in a direction approaching the mounting portion 111 and to be mountable to the mounting portion 111. Therefore, assembly work of the rotation sensor 101 can be facilitated.

The sandwiching portion 131 of the electric valve 100 according to the present invention has the notched portion 132 formed in the wiring portion 130. Therefore, the rotation sensor 101 can be inserted into and assembled to the sandwiching portion 131. As a result, assembly work can be facilitated.

Alternatively, instead of a groove cut from one end portion of the wiring portion 130, the notched portion 132 may be a long hole provided in a middle portion of the wiring portion 130, in which case the wiring portion 130 is folded so as to fold the long hole in half and a long hole portion is formed like a notch.

FIG. 6B shows a wiring portion that is a modification of the wiring portion 130 shown in FIG. 6A. FIG. 6B is a side view taken along the same arrow D as in FIG. 6A. While a wiring portion 135 is formed of a same conductive plate-like member as the wiring portion 130, a sandwiching portion 136 is formed by folding one end portion of the wiring portion 135 in a different orientation. While the sandwiching portion 131 is formed by notching one end portion of a conductive plate-like member, the sandwiching portion 136 is formed by repeatedly folding a conductive plate-like member a plurality of times to create the sandwiching portion 136 to be sandwiched between surfaces of one wiring portion 135. A gap between the opposing surfaces that clamp the lead wire 102 is formed slightly smaller than the width dimension of the lead wire 102 to ensure that the lead wire 102 reliably comes into contact with and is connected to the sandwiching portion 136.

A holding structure for holding the rotation sensor 101 provided in the mounting portion 111 will be described with reference to FIG. 4. The mounting portion 111 has inner walls 141, 142, and 143 provided in the wall portions 117, 118, and 119, respectively. The rotation sensor 101 is mounted in a space enclosed by the inner walls 141, 142, and 143. The rotation sensor 101 is formed as a flat rectangular parallelopiped, and fitted portions 107 and 108 are provided on a pair of parallel outer surfaces of the rotation sensor 101. In addition, the rotation sensor 101 is mounted to the inner wall 143 in a state where a corresponding outer surface of the rotation sensor 101 is in contact with the inner wall 143. A dimension between the inner walls 141 and 142 is formed equal to or slightly smaller than a dimension between a pair of opposite sides sandwiched between the inner walls 141 and 142. Therefore, the rotation sensor 101 is press-fitted between the inner walls 141 and 142 and reliably fixed.

The mounting portion 111 of the electric valve 100 according to the present invention has inner walls 141, 142, and 143 that hold an outer surface of the rotation sensor 101, and the mounting portion 111 is capable of sandwiching and holding the rotation sensor 101 with the inner walls 141, 142, and 143. Therefore, the rotation sensor 101 can be mounted by pushing the rotation sensor 101 into a space between the inner walls 141, 142, and 143. As a result, assembly work can be facilitated.

The inner walls 141 and 142 are provided with fitting portions 145 and 146 that are protruding portions. On the other hand, the fitted portions 107 and 108 that are recessed portions to which the fitting portions 145 and 146 are fitted are provided on a pair of parallel outer surfaces of the rotation sensor 101. The fitting portions 145 and 146 are fitted into the fitted portions 107 and 108 in a state where the rotation sensor 101 is mounted in the wall portions 117, 118, and 119.

In other words, the inner walls 141, 142, and 143 support corresponding outer surfaces of the rotation sensor 101, respectively, and the fitting portions 145 and 146 are fitted into and support the fitted portions 107 and 108.

Note that the inner walls 141, 142, and 143 may be provided on surfaces other than the side surfaces of the wall portions 117, 118, and 119. For example, instead of providing the wall portions 117, 118, and 119, a depression with a size that enables the rotation sensor 101 to be fitted thereinto may be provided in the mounting portion 111 formed in a flat surface-shape and inside surfaces of the depression may be adopted as the inner walls 141, 142, and 143 to which the rotation sensor 101 is fixed. In addition, instead of making the fitting portions 145 and 146 protruding portions and the fitted portions 107 and 108 recessed portions, the protruding portions and the recessed portions may be formed in an interchanged manner. In other words, the fitting portions 145 and 146 may be formed as recessed portions and the fitted portions 107 and 108 as protruding portions.

### [Positional relationship between rotation sensor 101 and rotary shaft 87]

A positional relationship between the rotation sensor 101 and a member to be detected will be described with reference to FIG. 3. The cover 110 is mounted to the upper part of the electric valve 100 so that the inside surface 106 faces downward or, in other words, toward inside of the electric valve 100. The rotation sensor 101 detects a rotational angle of the rotary shaft 87. The cover 110 and the electric valve 100 are arranged such that when the cover 110 is mounted to the electric valve 100, the rotation sensor 101 is positioned adjacent to the detected portion 105 of the rotary shaft 87 with a slight gap therebetween. An accommodation space is formed between the rotation sensor 101 and the valve element 80. The upper end part of the rotary shaft 87 protrudes into the accommodation space.

The rotation sensor 101 and the sealing portion 129 covering the rotation sensor 101 are mounted with a slight gap relative to components such as the rotary shaft 87. A mounting position accuracy of the rotation sensor 101 and a perpendicular direction distance of the sealing portion 129 from the mounting portion 111 are critical for the rotation sensor 101 to accurately detect the rotational angle of the rotary shaft 87. The mounting position accuracy of the rotation sensor 101 and the perpendicular direction distance of the sealing portion 129 from the mounting portion 111 are also critical for ensuring that the cover 110 does not interfere with other adjacent components inside the electric valve 100.

### [Mounting procedure of rotation sensor 101]

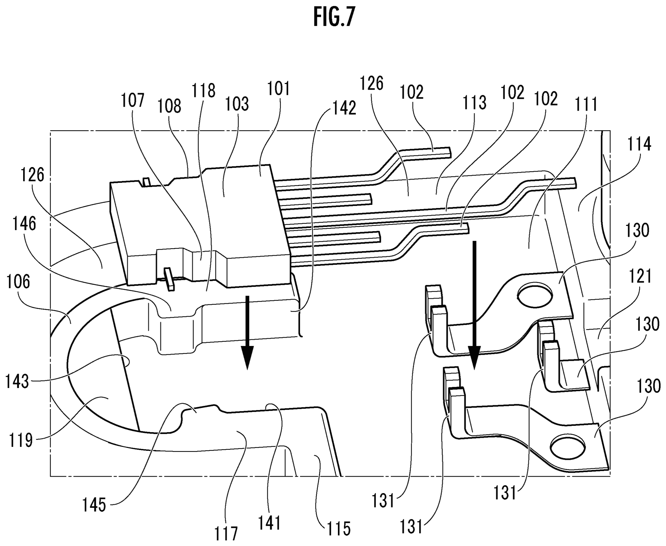

A mounting procedure of the rotation sensor 101 will be described with reference to FIG. 7. Note that an entity to perform the assembly work may be selected as appropriate from humans, assembly robots, assembly equipment, and the like. In the following description, the entity to perform the assembly work will be referred to as a "work entity". The rotation sensor 101 is held by the work entity and the rotation sensor 101 is brought close to the mounting portion 111. A sensor main body 103 is fitted into an inside space of the inner walls 141, 142, and 143 while aligning the fitting portions 145 and 146 with the fitted portions 107 and 108. Simultaneously with the insertion of the sensor main body 103, each lead wire 102 is inserted into the notched portion 132 of the sandwiching portion 131 corresponding to each lead wire 102 while holding the lead wires 102 with the work entity. By simultaneously inserting the sensor main body 103 and each lead wire 102, the number of work steps can be reduced as compared to inserting each lead wire 102 into the notched portion 132 after the sensor main body 103 has been fitted. Once mounting of the rotation sensor 101 is completed, the mounting portion 111 is filled with a fluid resin material, and the rotation sensor 101 is covered and solidified to form the sealing portion 129. Note that the sealing portion 129 needs only cover at least each lead wire 102. The rotation sensor 101 is mounted to the mounting portion 111 according to the method described above. The completed cover 110 is mounted to a predetermined location of the electric valve 100. Note that the insertion of each lead wire 102 into the notched portion 132 need not be simultaneous with the insertion of the sensor main body 103 and may be performed afterwards.

An electric valve (100) according to the present invention comprises:
a housing (10) having an opening (inflow portion 18) at one end and having communication ports (first outflow portion 11, second outflow portion 12, and third outflow portion 13) in an outer periphery;
a valve element (80) inserted into the housing (10) and configured to rotate around a rotary shaft (87) to open and close the communication ports (first outflow portion 11, second outflow portion 12, and third outflow portion 13);
a drive apparatus (motor 65 and speed reducer 66) configured to rotationally drive the valve element (80);
a detected portion (105) to be mounted to one end of the rotary shaft (87);
a rotation sensor (101) configured to detect a rotational angle of the detected portion (105); and
a cover (110) to be mounted on another end of the housing (10), wherein
the rotation sensor (101) has a sensor main body (103) and a lead wire (102),
the cover (110) comprises a mounting portion (111) configured to hold the sensor main body (103) so as to face the detected portion (105) and input/output wiring portions (130, 135) to which the lead wire (102) is connected, and
the wiring portions (130, 135) have sandwiching portions (131, 136) configured to sandwich the lead wire (102).

The electric valve 100 according to the present invention comprises the wiring portions 130, 135 to which the lead wire 102 of the rotation sensor 101 is connected, and the wiring portions 130, 135 have the sandwiching portions 131, 136 that sandwich the lead wire 102. Therefore, the electric valve 100 according to the present invention enables the lead wire 102 to be fixed to the wiring portions 130, 135 by simply inserting the lead wire 102 into the sandwiching portions 131, 136. As a result, assembly work of the rotation sensor 101 to the electric valve 100 can be facilitated and equipment costs can be reduced.

Preferably, the sandwiching portions 131, 136 of the electric valve 100 according to the present invention are formed so as to be capable of receiving the lead wire 102 from a same direction as a direction in which the rotation sensor 101 is inserted into the mounting portion 111 and sandwiching the lead wire 102.

According to the present invention, the lead wire 102 can be received from the same direction as the direction in which the rotation sensor 101 is inserted into the mounting portion 111 and the lead wire 102 can be sandwiched. Therefore, assembly work of the rotation sensor 101 can be facilitated.

Preferably, the sandwiching portions 131, 136 of the electric valve 100 according to the present invention have the notched portions 132 formed in the wiring portions 130.

The sandwiching portions 131, 136 of the electric valve 100 according to the present invention are the notched portions 132 formed in the wiring portions 130. Therefore, the lead wire 102 of the rotation sensor 101 can be inserted into the notched portions 132 and the lead wire 102 can be assembled to the sandwiching portions 131, 136. As a result, assembly work of the rotation sensor 101 to the electric valve 100 can be facilitated.

Preferably, the mounting portion 111 of the electric valve 100 according to the present invention has inner walls 141, 142, and 143 configured to hold an outer surface of the rotation sensor 101, and the mounting portion 111 is configured to be capable of sandwiching and holding the rotation sensor 101 with the inner walls 141, 142, and 143.

The mounting portion 111 of the electric valve 100 according to the present invention is capable of sandwiching and holding the rotation sensor 101 with the inner walls 141, 142, and 143. Therefore, the rotation sensor 101 can be mounted by pushing the rotation sensor 101 into a space between the inner walls 141, 142, and 143. As a result, assembly work can be facilitated.

Preferably, the electric valve 100 according to the present invention has the wall portions 114, 115, 116, 117, 118, and 119 that enclose the mounting portion 111, and the wall portions 114, 115, 116, 117, 118, and 119 have the outflow portions 121, 122, and 123 of which perpendicular direction distances of end surfaces of the wall portions 114, 115, 116, 117, 118, and 119 from the mounting portion 111 are formed smaller than other portions.

According to the present invention, when the resin material filled into the mounting portion 111 equals or exceeds a predetermined amount, the outflow portions 121, 122, and 123 can cause the resin material to flow out from the outflow portions 121, 122, and 123 and automatically adjust the resin material to a certain height. As a result, assembly work of a sensor that is the rotation sensor 101 can be facilitated and equipment costs can be reduced.

Preferably, the electric valve 100 according to the present invention comprises the sealing portion 129 configured to cover at least the lead wire 102, and the outflow portions 121, 122, and 123 are provided in plurality and arranged at positions where at least the sealing portion 129 is sandwiched. Since the lead wire 102 is covered by the sealing portion 129, the lead wire 102 can be insulated with the sealing portion 129 and short-circuiting of the lead wire 102 can be prevented.

According to the present invention, the viscous resin material filled into the mounting portion 111 is automatically adjusted to quickly achieve a uniform height. As a result, assembly work of the rotation sensor 101 can be facilitated and equipment costs can be reduced.

### <Other embodiments>

In the embodiment described above, the cover 110 comprising: the mounting portion 111 to which the rotation sensor 101 having the sensor main body 103 and the lead wire 102 is to be mounted; and the wiring portions 130 of which at least a part is arranged in the mounting portion 111 and to which the lead wire 102 is connected, the wiring portions 130 having the sandwiching portions 131 that sandwich the lead wire 102, and the electric valve 100 comprising the cover 110 according to the present invention have been described. However, the electric valve 100 according to the present invention is not limited thereto and may be modified as appropriate without departing from the spirit of the present invention. For example, the electric valve 100 may be applied to vehicles other than those equipped solely with the internal combustion engine ENG as a drive source and is applicable to fluid-cooled apparatuses for vehicles such as the internal combustion engine ENG in hybrid vehicles and a drive force-generating motor in electric vehicles, as well as to non-vehicle apparatuses.

In addition, the present invention may provide the electric valve 100 comprising a bypass path with a thermostat interposed inside the electric valve 100. Furthermore, in the present invention, the materials of each component, the positions of various pipes, and the arrangement of each apparatus within the cooling circuit described in the above embodiments may be modified as appropriate.

### Reference Signs List

10 housing
11 first outflow portion
12 second outflow portion
13 third outflow portion
18 inflow portion
22 internal space
23 first adapter
24 second adapter
40 support portion
65 motor
66 speed reducer
80 valve element
83 first valve portion
84 second valve portion
85, 86 valve opening
87 rotary shaft
100 electric valve
101 rotation sensor
102 lead wire
103 sensor main body
105 detected portion
110 cover
111 mounting portion
114, 115, 116, 117, 118, 119 wall portion
121, 122, 123 outflow portion
126 end surface
129 sealing portion
130, 135 wiring portion (bus bar)
131, 136 sandwiching portion
132 notched portion
141, 142, 143 inner wall
T1 first temperature
T2 second temperature
Tx fluid temperature (cooling water temperature)
EGR exhaust gas recirculation apparatus

## Claims

1. An electric valve, comprising:
a housing having an opening at one end and having communication ports in an outer periphery;
a valve element inserted into the housing and configured to rotate around a rotary shaft to open and close the communication ports;
a drive apparatus configured to rotationally drive the valve element;
a detected portion to be mounted to one end of the rotary shaft;
a rotation sensor configured to detect a rotational angle of the detected portion; and
a cover to be mounted on another end of the housing, wherein
the rotation sensor has a sensor main body and a lead wire,
the cover comprises a mounting portion configured to hold the sensor main body so as to face the detected portion and input/output wiring portions to which the lead wire is connected, and
the wiring portions have sandwiching portions configured to sandwich the lead wire.

2. The electric valve according to claim 1, wherein the sandwiching portions are formed so as to be capable of receiving the lead wire from a same direction as a direction in which the rotation sensor is inserted into the mounting portion and sandwiching the lead wire.

3. The electric valve according to claim 2, wherein the sandwiching portions are notched portions formed in the wiring portions.

4. The electric valve according to claim 3, wherein the mounting portion has inner walls configured to hold an outer surface of the rotation sensor, and
the mounting portion is capable of sandwiching and holding the rotation sensor with the inner walls.

5. The electric valve according to any one of claims 1 to 4, wherein the mounting portion has wall portions and an end surface of the wall portions, and
the wall portions have outflow portions formed smaller than a perpendicular direction distance of the end surface from a surface of the mounting portion.

6. The electric valve according to claim 5, wherein the cover comprises a sealing portion configured to cover at least the lead wire, and
the outflow portions are provided in plurality and arranged at positions where at least the sealing portion is sandwiched.
